# EUROPÄISCHE PATENTSCHRIFT

(11) **EP 0 441 850 B1**
(45) Veröffentlichungstag und Bekanntmachung des Hinweises auf die Patenterteilung: **09.06.1993**
(21) Anmeldenummer: 89912435.8
(22) Anmeldetag: 31.10.1989
(51) Int. Cl.: C08G 73/16, C09F 1/04, C09D 11/10

(54) **KONDENSATIONSPRODUKTE AUF BASIS VON KOLOPHONIUM-MALEINIMIDEN**
CONDENSATION PRODUCTS BASED ON COLOPHONIUM MALEIC IMIDES
PRODUITS DE CONDENSATION A BASE DE COLOPHANE-MALEINIMIDES

(30) Priorität: 04.11.1988 DE 3837518
(43) Veröffentlichungstag der Anmeldung: 21.08.1991
(73) Patentinhaber: BASF Lacke + Farben AG, 48165 Münster-Hiltrup (DE)
(72) Erfinder: PRANTL, Bernhard, D-6520 Worms 11 (DE); FRANK, Erich, D-7320 Göppingen (DE); KOCH, Walter, D-7000 Stuttgart 80 (DE); LÖBBERT, Gerd, D-7400 Tübingen (DE)
(74) Vertreter: Karau, Wolfgang, Dr.
(86) Internationale Anmeldenummer: EP8901297
(87) Internationale Veröffentlichungsnummer: WO9005159

(56) Entgegenhaltungen:
- GB-A- 1 232 058
- US-A- 3 554 981
- US-A- 3 554 982
- Chemials abstracts, vol.106, No.2, 12.01.1987, (Columbus,Ohio, USA) S.Maiti el al:"Polymers from renewable ressources:crosslinking and thermal behaviour", see page 6, abstract 5537x&Polym.Sci. Tecnol.(Plenum), 1986, 33(Renewable-resour.Mater.) 187-203.
- Chemicals Abstracts, vol.110, No.2, 9 January 1989, (Columbus, Ohio, US) M.Maiti et al : "Polymers from renewable resources.Part 6 Polyester-imides)from rosin", see page 90, abstract 9945j, & J.Polym.Mater, 1988, 5(3), 201-7.

## Beschreibung

Die vorliegende Erfindung betrifft Kondensationsprodukte auf Basis von Kolophonium-Maleinimiden, erhältlich durch Umsetzung eines Überschusses von Kolophonium mit Maleinsäureanhydrid, anschließender Kondensation mit einem Aminoalkohol mit einer primären Aminogruppe mit gegebenenfalls weiterer Kondensation zu höherkondensierten Produkten, gegebenenfalls weiterer Umsetzung mit dimerer und/oder trimerer Fettsäure und Veresterung mit einem Polyalkohol der Funktionalität 3 bis 6, ein Verfahren zu deren Herstellung sowie die Verwendung in Druckfarben.

Zur Herstellung von Druckfarben für den Offsetdruck werden als Lösungsmittel hochsiedende Mineralöle, d.h. unpolare Lösungsmittel verwendet. Polare Lösungsmittel, wie sie im Tiefdruck üblich sind, würden beim Kontakt mit dem im Offsetdruck obligatorischen Feuchtmittel Wasser zum unerwünschten Emulgieren führen. Harze (Kondensationsprodukte) für Offsetdruckfarben müssen also in unpolaren Mineralölen löslich sein, d.h. die Harze dürfen nicht zu viele polare Gruppen aufweisen.

Handelsübliche Harze für Offset-Druckfarben bestehen zum großen Teil aus kolophoniummodifizierten Phenolharzen, die mit Polyalkoholen verestert sind.

Aus der JP-A 7111354-R, der J-61264014-A und der US-A 4 643 848 sind Kondensationsprodukte aus Kolophonium, Maleinsäureanhydrid und Phenolharzen bekannt, die als Bindemittel für Drucktinten empfohlen werden. Nachteilig an diesen Harzen ist jedoch, daß sie nicht schnell genug trocknen und in einigen Fällen keinen guten Glanz aufweisen.

Aus der US 35 54 982 sind Polyamidimide bekannt, die durch Umsetzung eines Kolophonium-Maleinsäureanhydrid-Adduktes mit organischen Diaminen hergestellt würden und die für die Herstellung von Tiefdruckfarben geeignet sind. Diese Harze sind aber wegen ihrer polaren Gruppen in unpolaren Lösungsmitteln wie Mineralölen unlöslich und daher für Offset-Druckfarben ungeeignet.

In der US 35 54 981 werden Polyesterimide beschrieben, die durch Umsetzung eines Kolophonium-Maleinsäure-Adduktes mit Aminoalkoholen mit nachfolgender Kondensation erhältlich sind. Aber auch diese Harze sind unlöslich in unpolaren Lösungsmitteln wie Mineralölen und daher für Offset-Druckfarben ungeeignet.

Aufgabe der vorliegenden Erfindung war es, Kondensationsprodukte zu entwickeln, die löslich in unpolaren Lösungsmitteln sind und mit denen Druckfarben hergestellt werden können, die eine gute Verdruckbarkeit, rasches Trocknen und damit schnelle Klebfreiheit, hohen Glanz und geringe Geruchsbelästigung aufweisen.

Gelöst wurde die Aufgabe durch Kolophonium-Maleinsäureanhydrid-Addukte, die mit Aminoalkoholen zu Kondensationsprodukten kondensiert wurden und gegebenenfalls weiterkondensiert, gegebenenfalls mit dimeren und/oder trimeren Fettsäuren kondensiert und mit Polyalkoholen der Funktionalität 3 bis 6 verestert wurden.

Gegenstand der vorliegenden Erfindung sind Kondensationsprodukte auf Basis von Kolophonium-Maleinimiden, erhältlich durch
A) Umsetzung von 100 Gew.-Teilen Kolophonium mit 1 bis 20 Gew.-Teilen Maleinsäureanhydrid bei Temperaturen von 150 bis 250°C und
B) weitere Umsetzung des in Stufe A gebildeten Adduktes (A) mit einem Aminoalkohol mit einer primären Aminogruppe bei Temperaturen von 130 bis 250°C und mit einem Molverhältnis Anhydridgruppen zu Aminogruppen von 0,8 bis 1,2:1 und
C) gegebenenfalls weitere Kondensation des Kondensationsproduktes (B) bei einer Temperatur von 180 bis 300°C und/oder
D) gegebenenfalls weitere Umsetzung des in Stufe B oder C gebildeten Kondensationsproduktes (B) oder (C) mit einer dimeren und/oder trimeren Fettsäure mit einem Molverhältnis Hydroxylgruppen des Kondensationsproduktes (B) oder (C) zu Carboxylgruppen der Fettsäure von 0,1 bis 1,2:1 und
E) weitere Umsetzung des in Stufe B oder C oder D gebildeten Kondensationsproduktes (B), (C) oder (D) mit einem Polyalkohol der Funktionalität 3 bis 6 bei Temperaturen von 230 bis 300°C mit einem Molverhältnis von Carboxylgruppen zu Hydroxylgruppen von 0,7 bis 1,5:1.

Die Erfindung bezieht sich auch auf die Herstellung dieser Kondensationsprodukte sowie deren Verwendung in Druckfarben.

Zu den einzelnen Stufen und Aufbaukomponenten ist folgendes auszuführen:

Die Umsetzung von Kolophonium mit Maleinsäureanhydrid der Stufe A ist bekannt und wird bei einer Temperatur von 150 bis 250°C, bevorzugt 180 bis 230°C, durchgeführt. Es wird mit einem molaren Überschuß von Kolophonium gearbeitet, wobei auf 100 Gew.-Teile Kolophonium 1 bis 20, bevorzugt 5 bis 13 Gew.-Teile Maleinsäureanhydrid, eingesetzt werden. Überschüssiges Kolophonium wird in der Stufe E mit dem Polyalkohol verestert.

Das Kolophonium-Maleinsäureanhydrid-Addukt im Gemisch mit Kolophonium wird in der Stufe B mit einem Aminoalkohol mit einer primären Aminogruppe bei Temperaturen von 130 bis 250, bevorzugt 140 bis 210°C kondensiert. Dabei wird ein Molverhältnis von Anhydridgruppen zu Aminogruppen von 0,8 bis 2,1:1, bevorzugt 0,9 bis 1,1:1 eingestellt. Hierbei entsteht ein Kolophonium-Maleinimid mit Hydroxyl- und Carboxylgruppen, das mit sich selbst zu höhermolekularen Kondensationsprodukten wie gegebenenfalls in Stufe C bei einer Temperatur von 180 bis 300°C, bevorzugt 230 bis 280°C kondensiert werden kann.

Das Kondensationsprodukt (B) der Stufe B kann auch hergestellt werden, indem ein Kolophonium-Maleinsäureanhydrid-Addukt mit einem Aminoalkohol mit einer primären Aminogruppe in dem oben angegebenen Molverhältnis umgesetzt wird und in einem entsprechenden Überschuß von aufgeschmolzenem Kolophonium gelöst wird, oder indem ein Maleinsäureimid, hergestellt aus, Maleinsäureanhydrid und einem Aminoalkohol mit einer primären Aminogruppe im oben angegebenen Molverhältnis, mit einem molaren Überschuß von Kolophonium umgesetzt wird oder mit der äquimolaren Menge Kolophonium umgesetzt wird und in einem Überschuß von Kolophonium gelöst wird, jedoch ist die erste beschriebene Methode bevorzugt.

Geeignete Aminoalkohole mit einer primären Aminogruppe sind aliphatische Aminoalkohole wie Ethanolamin, Isopropanolamin, 3-Aminopropanol, Neopentanolamin, 2-Aminobutanol-1, aliphatische Aminoetheralkohole wie 2,2'-Aminoethoxyethanol oder Aminopolyalkohole wie Trishydroxymethylaminomethan. Bevorzugt werden Ethanolamin, Isopropanolamin und 2,2'-Aminoethoxyethanol verwendet.

Nachdem gegebenenfalls in Stufe C eine Weiterkondensation erfolgt ist, wird gegebenenfalls in Stufe D das Kondensationsprodukt (B) oder (C) mit einer dimeren und/oder trimeren Fettsäure bei Temperaturen von 150 bis 300°C, bevorzugt 170 bis 230°C, mit einem Molverhältnis Hydroxylgruppen des Kondensationsproduktes (B) oder (C) zu Carboxylgruppen der Fettsäure und 0,1 bis 1,2:1, bevorzugt 0,8 bis 1,1:1, verestert. Die dimeren und/oder trimeren Fettsäuren sind erhältlich durch Dimerisierung bzw.

Trimerisierung von ungesättigten, vorwiegend C₁₆- bis C₁₈-Carbonsäuren (Pripol® der Fa. Unichema). Bevorzugt werden dimere Fettsäuren verwendet. Die Kondensationsprodukte (B), (C) oder (D) werden in der Stufe E mit einem Polyalkohol der Funktionalität 3 bis 6 bei Temperaturen von 230 bis 300°C, bevorzugt 250 bis 280°C, gegebenenfalls in Gegenwart von üblichen Veresterungskatalysatoren, mit einem Molverhältnis von Carboxylgruppen des Reaktionsgemisches (B), (C) oder (D) zu Hydroxylgruppen der Polyalkohole von 0,7 bis 1,5:1, bevorzugt 0,8 bis 1,1:1, verestert. Geeignete Polyole sind aliphatische Polyole mit einer Funktionalität von 3 bis 6 wie Trimethylolpropan, Glycerin, Pentaerythrit, Dipentaerythrit oder Sorbit oder Aminoalkohole wie Triethanolamin und Triisopropanolamin oder Umsetzungsprodukte dieser Polyalkohole mit Ethylenoxid und/oder Propylenoxid oder Gemische dieser Polyalkohole. Bevorzugt werden Trimethylolpropan, Glycerin, Pentaerythrit oder deren Gemische verwendet.

Die resultierenden Harze sind bei Raumtemperatur feste Produkte mit Schmelzpunkten, die je nach Harzaufbau zwischen etwa 80 und 160°C liegen. Sie weisen im allgemeinen Säurezahlen von 5 bis 40 mg KOH/g, bevorzugt 10 bis 25 mg KOH/g auf. Die Harze lösen sich in Mineralöl, das weitere unpolare Lösungsmittel enthalten kann, zu klaren Mineralölfirnissen. Durch Zusatz von Pigmenten, üblichen Hilfs- und Zusatzmitteln lassen sich aus diesen Firnissen Druckfarben formulieren, die lagerstabil sind, d.h. die keine Viskositätserhöhungen zeigen, sich gut verdrucken lassen, schnell zu klebfreien Drucken trocknen, die einen hohen Glanz aufweisen.

### Beispiel 1

2338 g Kolophonium wurden unter Stickstoff mit 294 g Maleinsäureanhydrid 2 Stunden bei 200°C umgesetzt, anschließend wurde bei 145°C während 15 Minuten 183 g Ethanolamin zugegeben. Nach 30 Minuten wurde während. 2 Stunden die Temperatur auf 200°C unter Abdestillieren von Reaktionswasser erhöht und anschließend 147 g Pentaerythrit und 3 g Magnesiumoxid zugegeben. Während 2 Stunden wurde die Temperatur auf 265°C erhöht. Bei 265°C wurde Reaktionswasser abdestilliert bis eine Säurezahl 27 erreicht wurde, dann wurde 2 Stunden ein Vakuum von ca. 50 Torr angelegt. Anschließend wurde die Reaktion weitergeführt bis eine Säurezahl von 22 erreicht war. Das Harz hatte einen Schmelzpunkt von 137°C und eine Viskosität von 750 mPas bei 23°C in 50 gew.%iger Lösung in Butyldiglykol.

Ein Mineralölfirnis aus 45 g Harz, 40 g Mineralöl des Siedebereiches 260 bis 290°C und 15 g Alkydharz auf Basis Leinöl, Phthalsäureanhydrid und Glycerin war klar mit sehr niedriger Zügigkeit (Klebrigkeit, Tack) und einer Viskosität von 25 Pas (23°C).

Aus 72 g dieses Firnisses, 13 g Blaupigment (Pigmentblau 15), 5 g Weichmacher (Dioctyladipat), 5 g Alkydharz auf Basis Leinöl, Phthalsäureanhydrid und Glycerin, 5 g Vaseline wurde eine Offset-Druckfarbe formuliert. Die Farbe hatte eine Viskosität von 12 Pas (23°C) bei mittlerer Zügigkeit. Sie zeigte eine sehr rasche Trocknung bei erhöhter Temperatur und war, verglichen mit Farben auf Basis kolophoniummodifizierter Phenolharze, deutlich rascher klebfrei.

Die Druckfarbe war bei einem Probedruck auf Alufolie bei 40°C bereits nach 120 Sekunden klebfrei, eine Standardfarbe mit kolophoniummodifiziertem Phenolharz erst nach 300 Sekunden.

### Beispiel 2

1616 g Kolophonium wurden unter Stickstoff mit 204 g Maleinsäureanhydrid während 2 Stunden bei 200°C umgesetzt, anschließend wurden bei 145°C während 30 Minuten 127 g Ethanolamin zugegeben. Nach 30 Minuten Rühren bei 145°C wurde die Temperatur während 2 Stunden auf 200°C erhöht unter Abdestillation von Reaktionswasser. Nach 30 Minuten Rühren bei 200°C wurde während 1 Stunde 435 g C₃₆-Dimer-Fettsäure zugegeben. Man ließ bei 225°C 4 Stunden reagieren unter Abdestillieren von Reaktionswasser, gab dann 178 g Pentaerythrit und 2,5 g Zinkoxid hinzu und erhöhte die Temperatur auf 265°C. Man hielt diese Temperatur unter Abdestillieren von Reaktionswasser bis die Säurezahl auf 15 gefallen war. Das Harz hatte einen Schmelzpunkt von 105°C.

Ein Firnis aus 46 g Harz, 21 g Leinöl und 33 g Mineralöl des Siedebereichs 260 bis 290°C hatte bei 23°C eine Viskosität von 45 Pas und eine sehr niedrige Zügigkeit. Aus 44,5 g Harz, 40 g Mineralöl des Siedebereichs 260 bis 290°C, 15 g Alkydharz auf Basis von Leinöl, Phthalsäureanhydrid und Glycerin, 0,5 g Gelierungsmittel (Aluminiumalkoholat) wurde ein klarer Firnis hergestellt, der eine Viskosität von 31 Pas (23°C) aufwies, bei niedriger Zügigkeit.

Aus 67 g dieses Firnisses, 19 g Rotpigment (Pigmentrot 57), 4 g Weichmacher (Dioctyladipat), 5 g Alkydharz auf Basis von Leinöl, Phthalsäureanhydrid und Glycerin, 5 g Vaseline wurde eine Offset-Druckfarbe formuliert. Die Farbe hatte eine Viskosität von 15 Pas bei mittlerer Zügigkeit. Die Farbe zeigte bei guter Verdruckbarkeit Glanzsteigerungen bis zu 10 %, verglichen mit Farben auf Basis kolophoniummodifizierter Phenolharze.

## Patentansprüche

1. Kondensationsprodukte auf Basis von Kolophonium-Maleinimiden, erhältlich durch
A) Umsetzung von 100 Gew.-Teilen Kolophonium mit 1 bis 20 Gew.-Teilen Maleinsäureanhydrid bei einer Temperatur von 150 bis 250°C und
B) weitere Umsetzung des in Stufe A gebildeten Adduktes (A) mit einem Aminoalkohol mit einer primären Aminogruppe bei Temperaturen von 130 bis 250°C und mit einem Molverhältnis Anhydridgruppen zu Aminogruppen von 0,8 bis 1,2:1 und
C) gewünschtenfalls weitere Kondensation des Kondensationsproduktes (B) bei einer Temperatur von 180 bis 300°C und/oder
D) gewünschtenfalls weitere Umsetzung des in Stufe B oder C gebildeten Kondensationsproduktes (B) oder (C) mit einer dimeren und/oder trimeren Fettsäure bei Temperaturen von 150 bis 300°C und mit einem Molverhältnis von Hydroxylgruppen des Kondensationsproduktes (B) oder (C) zu Carboxylgruppen der Fettsäure von 0,1 bis 1,2:1 und
E) weitere Umsetzung des in Stufe B, C oder D gebildeten Kondensationsproduktes (B), (C) oder (D) mit einem Polyalkohol der Funktionalität 3 bis 6 bei Temperaturen von 230 bis 300°C mit einem Molverhältnis von Carboxylgruppen zu Hydroxylgruppen von 0,7 bis 1,5:1.

2. Kondensationsprodukte nach Anspruch 1, erhältlich unter Verwendung von aliphatischen Aminoalkoholen als primäre Amine in der Stufe B.

3. Kondensationsprodukte nach einem der Ansprüche 1 oder 2, erhältlich unter Verwendung von Ethanolamin, Isopropanolamin, 3-Aminopropanol, Neopentanolamin oder 2,2'-Aminoethoxyethanol oder deren Gemische als primäre Amine in der Stufe B.

4. Kondensationsprodukte nach einem der Ansprüche 1 bis 3, erhältlich unter Verwendung eines aliphatischen Polyalkohols mit der Funktionalität 3 bis 6 in der Stufe E.

5. Kondensationsprodukte nach einem der Ansprüche 1 bis 4, erhältlich unter Verwendung von Glycerin, Trimethylolpropan, Pentaerythrit, Dipentaerythrit oder Sorbit in der Stufe E.

6. Verfahren zur Herstellung der Kondensationsprodukte gemäß einem der Ansprüche 1 bis 5, dadurch gekennzeichnet, daß man sie gemäß den in Anspruch 1 genannten Maßnahmen herstellt.

7. Verwendung der Kondensationsprodukte gemäß einem der Ansprüche 1 bis 5 zur Herstellung von Druckfarben.

8. Druckfarben erhältlich unter Verwendung der Kondensationsprodukte gemäß einem der Ansprüche 1 bis 5.

## Claims

1. A condensation product based on a rosin maleimide, obtainable by
A) reacting 100 parts by weight of rosin with from 1 to 20 parts by weight of maleic anhydride at from 150 to 250°C,
B) further reacting the stage A adduct (A) with an amino alcohol having a primary amino group at from 130 to 250°C in a molar ratio of anhydride groups to amino groups of from 0.8 to 1.2:1 and
C) optionally further condensing the condensation product (B) at from 180 to 300°C or
D) optionally further reacting the stage B or C condensation product (B) or (C) with a dimeric or trimeric fatty acid at from 150 to 300°C in a molar ratio of hydroxyl groups of condensation product (B) or (C) to carboxyl groups of fatty acid of from 0.1 to 1.2:1 and
(E) further reacting the stage B or C or D condensation product (B), (C) or (D) with a polyalcohol of functionality 3-6 at from 230 to 300°C in a molar ratio of carboxyl groups to hydroxyl groups of from 0.7 to 1.5:1.

2. A condensation product as claimed in claim 1, obtainable using an aliphatic amino alcohol as primary amine in stage B.

3. A condensation product as claimed in either claim 1 or claim 2, obtainable using ethanolamine, isopropanolamine, 3-aminopropanol, neopentanolamine or 2,2'-aminoethoxyethanol or a mixture thereof as primary amine in stage B.

4. A condensation product as claimed in any one of claims 1 to 3, obtainable using an aliphatic polyalcohol of functionality 3-6 in stage E.

5. A condensation product as claimed in any one of claims 1 to 4, obtainable using glycerol, trimethylolpropane, pentaerythritol, dipentaerythritol or sorbitol in stage E.

6. A process for preparing a condensation product as claimed in any one of claims 1 to 5, which comprises preparing it by the measures specified in claim 1.

7. The use of a condensation product as claimed in any one of claims 1 to 5 for preparing a printing ink.

8. A printing ink obtainable using a condensation product as claimed in any one of claims 1 to 5.

## Revendications

1. Produits de condensation à base de colophane-maléinimides que l'on peut obtenir
A) en faisant réagir 100 parties en poids de colophane avec 1 à 20 parties en poids d'anhydride maléique à une température comprise entre 150 et 250 degrés C et
B) en poursuivant la réaction du produit d'addition (A) formé durant l'étape A avec un aminoalcool doté d'un groupe amino primaire à des températures comprises entre 130 et 250 degrés C et selon un rapport molaire des groupes d'anhydride aux groupes amino de 0,8 à 1,2 : 1 et
C) en poursuivant de préférence la condensation du produit de condensation (B) à une température de 180 à 300 degrés C et/ou
D) en poursuivant de préférence la réaction du produit de condensation (B) ou (C) formé durant l'étape B ou C avec un acide gras dimère et/ou trimère à des températures comprises entre 150 et 300 degrés C et selon un rapport molaire des groupes hydroxyle du produit de condensation (B) ou (C) aux groupes carboxyle de l'acide gras de 0,1 à 1,2 : 1 et
E) en poursuivant la réaction du produit de condensation (B), (C) ou (D) formé durant l'étape B, C ou D avec un polyalcool dont la fonctionnalité est de 3 à 6 à des températures de 230 à 300 degrés C et selon un rapport molaire des groupes carboxyle aux groupes hydroxyle de 0,7 à 1,5 : 1.

2. Produits de condensation selon la revendication 1 que l'on peut obtenir en employant comme amines primaires dans l'étape B des aminoalcools aliphatiques.

3. Produits de condensation selon une des revendications 1 ou 2 que l'on peut obtenir en employant comme amines primaires dans l'étape B de l'éthanolamine, de l'isopropanolamine, du 3-aminopropanol, néopentanolamine ou 2,2'-aminoéthoxyéthanol ou le mélange de ces derniers.

4. Produits de condensation selon une des revendications 1 à 3, que l'on peut obtenir en employant dans l'étape E un polyalcool aliphatique dont la fonctionnalité est de 3 à 6.

5. Produits de condensation selon une des revendications 1 à 4, que l'on peut obtenir en employant dans l'étape E de la glycérine, du triméthylolpropane, du pentaérithrite, du dipentaérythrite ou de la sorbite.

6. Procédé de préparation des produits de condensation selon une des revendications 1 à 5, caractérisé en ce qu'on les prépare en suivant les mesures indiquées dans la revendication 1.

7. Emploi des produits de condensation selon une des revendications 1 à 5 pour la fabrication d'encres d'imprimerie.

8. Encres d'imprimerie que l'on peut obtenir par l'emploi des produits de condensation selon une des revendications 1 à 5.
